# DEMANDE DE BREVET EUROPEEN

(11) **EP 1 340 904 A1**
(43) Date de publication de la demande: **03.09.2003**
(21) Numéro de dépôt: 03290494.8
(22) Date de dépôt: 03.03.2003
(51) Int. Cl.: F02M 25/07, F02M 31/13, F02B 37/16

(54) **Système à basse pression de recirculation des gaz d'échappement**

(30) Priorité: 01.03.2002 FR 0202614
(71) Demandeur: Renault s.a.s., 92100 Boulogne Billancourt (FR)
(72) Inventeur: Fiette, Sébastien, 91510 Lardy (FR); Lemoine, Eric, 78510 Triel sur Seine (FR); Gambino, Davy, 91590 Baulne (FR)
(74) Mandataire: Cemeli, Eric

(57) **Abrégé**

L'invention propose un moteur à combustion interne (4) à recirculation de gaz d'échappement, alimenté en air par une conduite d'admission portant au moins un compresseur (2), les gaz d'échappement étant évacués par un circuit de refoulement portant au moins une turbine (5) et un ensemble fonctionnel de dépollution (6), ce moteur comportant d'autre part des moyens de recirculation des gaz d'échappement comprenant une vanne (8), une conduite (9) prélevant les gaz d'échappement en aval de la fonction dépollution et étant raccordé sur la conduite d'admission.

Ce dispositif est caractérisé en ce qu'une différence de pression entre l'entrée et la sortie de la conduite est pilotée par un système (7) placé sur le conduit d'échappement en aval du prélèvement (10) des gaz d'échappement recirculés.

## Description

La présente invention concerne le traitement des émissions polluantes dans le domaine des moteurs automobiles.

Elle concerne plus particulièrement les moteurs automobiles comprenant un système de recirculation des gaz d'échappement (EGR : Exhaust Gas Recirculation), système dont l'utilisation s'est imposée afin de réduire les émissions d'oxyde d'azote.

Les systèmes de ce type présentent l'avantage de pouvoir réinjecter suivant les conditions de fonctionnement du moteur une partie des gaz d'échappement dans les chambres de combustion du moteur, ce qui a pour effet de réduire en proportion la quantité de gaz comburant et donc d'abaisser la température de combustion. Une soupape pilotée, appelée vanne EGR, ferme ou ouvre une canalisation reliant le collecteur d'échappement au collecteur d'admission, et permet ainsi d'injecter à l'admission une quantité déterminée de gaz prélevés à l'échappement suivant les conditions de fonctionnement du moteur.

Dans le même temps, l'utilisation, en aval d'un moteur, d'un filtre à particules est devenue incontournable afin d'éliminer les particules de suie des gaz d'échappement produites lors de la combustion. La recirculation des gaz d'échappement est donc d'autant plus intéressante qu'elle est initiée en aval de l'ensemble fonctionnel de dépollution.

La publication WO99/09307 décrit un tel agencement, dans lequel les gaz d'échappement recirculés sont prélevés après le catalyseur et le filtre à particules. Ces gaz contiennent alors moins de suie, ce qui permet de limiter ou d'éviter l'encrassement de la vanne, et du circuit de recirculation des gaz d'échappement. Cette publication décrit et représente un moteur diesel accompagné d'un système de recirculation des gaz dans lequel les gaz prélevés en aval de l'ensemble fonctionnel de dépollution sont successivement refroidis, dirigés à travers une vanne, mélangés à de l'air entrant, à nouveau refroidis, compressés puis refroidis avant d'atteindre la chambre de combustion. Cet agencement présente divers inconvénients. Ainsi, le nombre de refroidisseurs, le positionnement de la vanne ou l'utilisation évoquée dans la publication WO99/09307 d'une pompe pour obtenir le taux de gaz d'échappement recirculés requis sont des obstacles à la simplification de la mise en place et à la diminution du coût de réalisation, deux objectifs que cherchent à atteindre chaque constructeur. Le nombre de refroidisseurs rend également impossible la faculté d'amener des gaz d'échappement recirculés moins froid à la chambre de combustion lorsque cela est nécessaire. De plus, seul un moteur diesel est évoqué en association avec le système de recirculation des gaz.

Pour remédier à ces inconvénients, l'invention propose un moteur à combustion interne à recirculation de gaz d'échappement, alimenté en air par une conduite d'admission portant au moins un compresseur, les gaz d'échappement étant évacués par un circuit de refoulement portant au moins une turbine et un ensemble fonctionnel de dépollution, ce moteur comportant d'autre part des moyens de recirculation des gaz d'échappement comprenant une vanne, une conduite prélevant les gaz d'échappement en aval de la fonction dépollution et étant raccordé sur la conduite d'admission.

Ce dispositif est caractérisé en ce qu'une différence de pression entre l'entrée et la sortie de la conduite est pilotée par un système placé sur le conduit d'échappement en aval du prélèvement des gaz d'échappement recirculés.

Selon une caractéristique de la présente invention, le système générateur de différence de pression est un volet d'échappement.

Selon une caractéristique de la présente invention, le volet d'échappement est incorporable dans un silencieux d'échappement.

Selon une caractéristique de la présente invention, le moteur comprend en outre un moyen de réchauffage des gaz d'admission, disposé en aval du compresseur.

Selon une caractéristique de la présente invention, le moyen de réchauffage est un système de dérivation associé à un refroidisseur d'air de suralimentation, placé sur la conduite d'admission.

Selon une caractéristique de la présente invention, le moyen de réchauffage est au moins une résistance chauffante placée dans la conduite d'admission.

Selon une caractéristique de la présente invention, les gaz d'échappement recirculés ne sont traités thermiquement que par un unique refroidisseur.

Selon une caractéristique de la présente invention, l'unique refroidisseur des gaz d'échappement recirculés est situé sur la conduite de recirculation.

Selon une caractéristique de la présente invention, l'unique refroidisseur des gaz d'échappement recirculés est le refroidisseur d'air de suralimentation.

Selon une caractéristique de la présente invention, un débitmètre d'air, en sortie d'un filtre à air placé sur la conduite d'admission en amont du compresseur, indique la masse d'air frais apportée à ce compresseur afin de piloter le taux de recirculation des gaz d'échappement.

D'autres caractéristiques et avantages de l'invention apparaîtront à la lecture de la description détaillée qui suit pour la compréhension de laquelle on se reportera aux dessins annexés suivants :
- la figure 1 est une représentation schématique du circuit de recirculation des gaz selon l'invention.
- la figure 2 est une représentation schématique du circuit de recirculation des gaz selon un second mode de réalisation.

Selon une conception connue, de l'air traité par un filtre à air 1 est comprimé par un compresseur 2, puis éventuellement densifié dans un refroidisseur d'air de suralimentation 3 avant d'entrer dans une chambre de combustion du moteur 4. Les gaz d'échappement sont alors dirigés vers une turbine 5 puis entrent dans l'ensemble fonctionnel de dépollution 6 formé par exemple par un catalyseur et/ou un filtre à particules, et/ou un absorbeur d'oxydes d'azote.

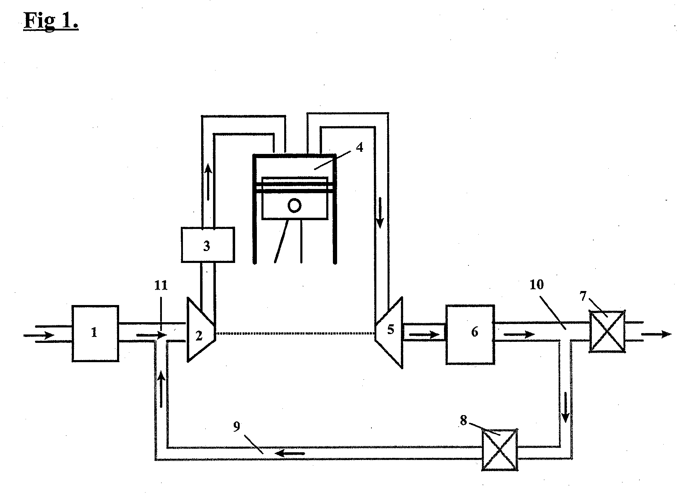

Selon la figure 1, le prélèvement des gaz d'échappement recirculés 10 est opéré en aval de l'ensemble fonctionnel de dépollution 6. Une conduite 9, agrémentée d'une vanne 8, relie ce point de prélèvement 10 à un point de raccordement 11 situé en amont du compresseur 2. La vanne 8 permet de contrôler le débit de gaz d'échappement envoyé à travers le circuit de recirculation des gaz. Lorsqu'on ne veut pas faire recirculer les gaz d'échappement, la vanne 8 est fermée et un volet d'échappement 7, placé sur la conduite d'échappement, est grand ouvert. Les gaz d'échappement sont alors évacués dans leur intégralité vers l'atmosphère. Pour faire recirculer les gaz d'échappement, on ouvre la vanne 8. Plus l'ouverture de cette vanne 8 est importante, plus le taux de gaz d'échappement recirculés introduis dans le moteur sera important. Les gaz d'échappement recirculés traversent alors la conduite 9 jusqu'au point de raccordement 11 situé en amont du compresseur 2 afin d'être mélangés à l'air frais filtré par le filtre à air 1. Ce mélange traverse alors le compresseur 2 puis le refroidisseur d'air de suralimentation 3 avant d'entrer dans le moteur 4. Selon une variante de la présente invention, lorsqu'un traitement thermique est nécessaire, les gaz d'échappement recirculés sont refroidis par un unique refroidisseur d'air 3, ce qui représente un double avantage. Les refroidisseurs spécifiques aux gaz d'échappement recirculés sont supprimés et le refroidisseur d'air de suralimentation 3 fonctionne à pleine charge, alors qu'il est normalement sous utilisé en période de recirculation des gaz.

Le débit maximal de gaz d'échappement recirculés réalisable est fonction de la perméabilité, c'est à dire la fluidité d'écoulement du circuit de recirculation, et de la différence de pression régnant entre l'entrée 10, correspondant au point de prélèvement des gaz d'échappement à faire recirculer, et la sortie 11, correspondant au point de raccordement à la conduite d'admission d'air, de ce circuit de recirculation des gaz d'échappement. Si la différence de pression est trop faible pour obtenir le débit de recirculation des gaz souhaité, on utilise le volet d'échappement 7 pour fermer en partie le conduit d'échappement afin d'augmenter la pression à l'entrée 10 du circuit EGR. Le volet d'échappement peut être incorporé dans un silencieux d'échappement, non représenté, formant ainsi un échappement bi-mode limitant plus ou moins le passage des gaz en fonction de la contre pression désirée afin d'optimiser les performances du moteur. L'action du volet à l'échappement consiste à augmenter la pression à l'entrée 10 du circuit de recirculation des gaz. Il sera compris que tout système placé sur le conduit d'échappement en aval du prélèvement 10 des gaz d'échappement à faire recirculer, permettant de limiter sur demande l'écoulement des gaz d'échappement et entraînant ainsi une surpression dans le tube d'échappement à l'entrée 10 du circuit de recirculation des gaz, est équivalent.

Le prélèvement 10 de gaz d'échappement à faire recirculer, en aval de la fonction dépollution 6, permet d'utiliser des gaz refroidis par l'action de la turbine 5 et purifiés par le catalyseur et le filtre à particules. Des gaz d'échappement recirculés plus froids, et donc plus denses, permettent d'optimiser le taux de recirculation ou d'atteindre ce taux plus rapidement pour une ouverture de vanne donnée. Des gaz d'échappement recirculés moins encrassés, car ne contenant plus de suie, favorisent un meilleur rendement de combustion et augmentent la fiabilité des composants tels que la turbine 5, la vanne 8, ainsi que la conduite d'admission. Cette position du prélèvement 10 en aval de la fonction dépollution supprime de plus le « piquage des gaz d'échappement recirculés» dans le collecteur d'échappement en sortie du moteur, ce qui optimise le rendement du turbocompresseur par l'augmentation du débit d'air dans la turbine. Le raccordement de la conduite 9 en amont du compresseur 2 permet une meilleure gestion du taux de recirculation des gaz d'échappement et permet d'éviter un surdimensionnement de la quantité de gaz d'échappement à faire recirculer. Cette quantité doit être suffisante pour obtenir le taux de mélange requis. Dans le cas d'un raccordement de la conduite de recirculation des gaz, en sortie du compresseur 2, dans le collecteur d'admission, le volume de gaz à apporter est beaucoup plus important que dans le cas d'un raccordement en amont du compresseur. Un débitmètre d'air, non représenté, installé à la sortie du filtre à air 1 donne la masse d'air frais apporté au compresseur 2 et permet donc de déduire la masse de gaz d'échappement à mélanger à cet air frais pour obtenir le taux requis. De plus, la régulation de la pression de suralimentation n'est pas perturbée par le taux de recirculation des gaz réalisé, lorsque le raccordement de la conduite a lieu en amont du compresseur 2.

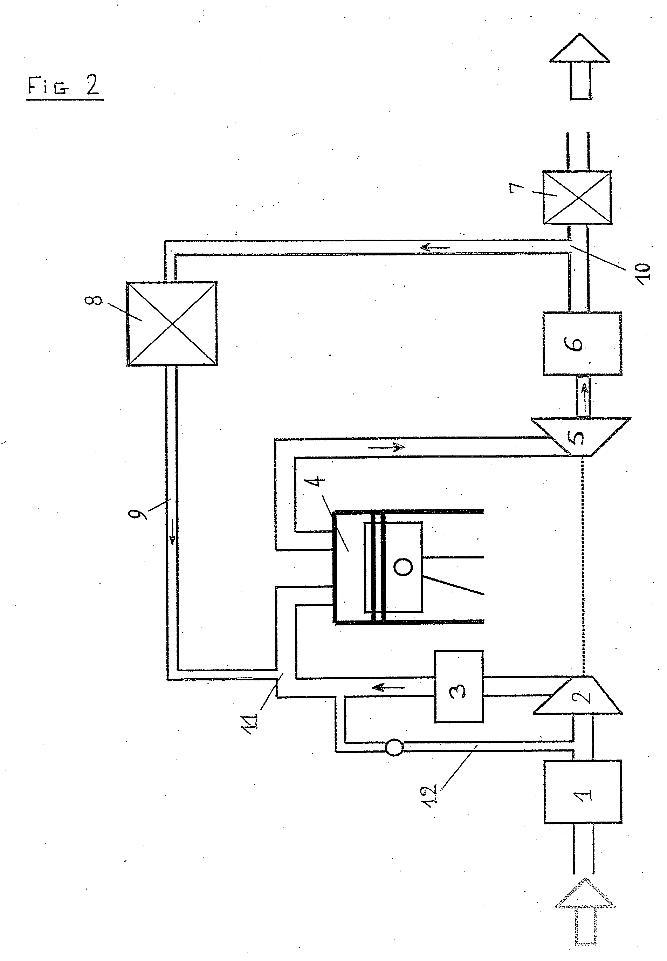

La figure 2 décrit et représente un second mode de réalisation dans lequel le prélèvement 10 est identique, mais où le raccordement 11 de la conduite 9 a lieu en aval du compresseur. La pression de l'air en sortie du compresseur impose une pression élevée au point de raccordement de la conduite EGR. Il est alors nécessaire d'augmenter la contre pression engendrée par le volet d'échappement 7 à l'entrée 10 de la conduite EGR, ce qui peut être difficilement réalisable. Afin de régler ce problème de pression, la présente invention propose par exemple une conduite de dérivation 12 permettant un pilotage de la pression dans le collecteur d'admission en réalisant un retour de l'air compressé en amont du compresseur 2.

Lors des démarrages à température ambiante (<20°C), il est intéressant d'obtenir des gaz d'échappement recirculés moins froid qu'à l'ordinaire, ce qui permet alors d'amorcer plus rapidement le catalyseur d'oxydation. La présente invention permet d'associer à l'unique échangeur de chaleur, le refroidisseur d'air de suralimentation, une dérivation permettant momentanément de ne pas faire passer les gaz d'échappement recirculés dans le refroidisseur associé. Ce système de dérivation peut être remplacé par l'utilisation de résistances chauffantes, implantées dans les conduits d'admission d'air, qui permettent de réchauffer l'air entrant dans le moteur lors des démarrages à température ambiante.

Le système de recirculation des gaz d'échappement selon l'invention est applicable aussi bien pour les véhicules à moteur diesel que pour les véhicules à moteur essence. Dans le cas d'un véhicule à moteur diesel, l'ensemble fonctionnel de dépollution 6 correspondant est alors composé d'au moins un catalyseur et un filtre à particules et d'éventuellement un piège à Nox (oxydes d'azote). Dans le cas d'un véhicule à moteur essence, cet ensemble de dépollution 6 est alors formé d'au moins un catalyseur et éventuellement d'un piège à Nox. Dans ce dernier cas, le prélèvement des gaz d'échappement recirculés a lieu en sortie du catalyseur. Le système de recirculation des gaz selon l'invention présente l'avantage d'autoriser toute évolution du moteur et/ou de l'échappement.

Un autre avantage de la présente invention est la simplification des «piquages des gaz d'échappement recirculés», zone de prélèvement 10 et zone de raccordement 11 de la conduite 9 à la conduite d'admission d'air, ce qui permet de limiter les perturbations acoustiques engendrées par ces piquages.

L'invention n'est nullement limitée au mode de réalisation décrit et illustré qui n'a été donné qu'à titre d'exemple.

## Revendications

1. Moteur à combustion interne à recirculation de gaz d'échappement, alimenté en air par une conduite d'admission portant au moins un compresseur 2, les gaz d'échappement étant évacués par un circuit de refoulement portant au moins une turbine 5 et un ensemble fonctionnel de dépollution 6, ce moteur comportant d'autre part des moyens de recirculation des gaz d'échappement comprenant une vanne 8, une conduite 9 prélevant les gaz d'échappement en aval de la fonction dépollution 6 et étant raccordé sur la conduite d'admission,
**caractérisé en ce qu'**une différence de pression entre l'entrée 10 et la sortie 11 de la conduite 9 est pilotée par un système placé sur le conduit d'échappement en aval du prélèvement 10 des gaz d'échappement recirculés.

2. Moteur selon la revendication 1, **caractérisé en ce que** le système générateur de différence de pression est un volet 7.

3. Moteur selon la revendication 2, **caractérisé en ce que** le volet 7 est incorporé dans un silencieux d'échappement.

4. Moteur selon l'une des revendications 1 à 3, **caractérisé en ce qu'**il comprend en outre un moyen de réchauffage des gaz d'admission, disposé en aval du compresseur.

5. Moteur selon la revendication 4, **caractérisé en ce que** le moyen de réchauffage est un système de dérivation associé à un refroidisseur d'air de suralimentation 3, placé sur la conduite d'admission.

6. Moteur selon la revendication 4, **caractérisé en ce que** le moyen de réchauffage est au moins une résistance chauffante placée dans la conduite d'admission.

7. Moteur selon l'une des revendications précédentes, **caractérisé en ce que** les gaz d'échappement recirculés ne sont traités thermiquement que par un unique refroidisseur.

8. Moteur selon la revendication 7, **caractérisé en ce que** l'unique refroidisseur des gaz d'échappement recirculés est situé sur la conduite 9 de recirculation.

9. Moteur selon la revendication 7, **caractérisé en ce que** l'unique refroidisseur des gaz d'échappement recirculés est le refroidisseur d'air de suralimentation 3.

10. Moteur selon l'une des revendications précédentes, **caractérisé en ce qu'**un débitmètre d'air, en sortie d'un filtre à air 1 placé sur la conduite d'admission en amont du compresseur 2, indique la masse d'air frais apporté à ce compresseur 2 afin de piloter le taux de recirculation des gaz d'échappement.
